Europäisches Patentamt

(19) European Patent Office

Office européen des brevets

(11) Publication number: **0 030 810**
**B1**

(12) **EUROPEAN PATENT SPECIFICATION**

(45) Date of publication of patent specification: **16.02.83**.

(51) Int. Cl.³: **B 60 R 1/06**

(21) Application number: **80304325.6**

(22) Date of filing: **02.12.80**

(54) Folding exterior rearview mirror, particularly for a motor vehicle.

(30) Priority: **18.12.79 FR 7931016**

(43) Date of publication of application:
**24.06.81 Bulletin 81/25**

(45) Publication of the grant of the patent:
**16.02.83 Bulletin 83/7**

(84) Designated Contracting States:
**DE FR GB IT**

(56) References cited:
**EP - A - 0 003 608**
**DE - A - 2 546 759**

(73) Proprietor: **BRITAX (GECO) S.A.**
**1 et 3 Route d'Héricy**
**F-77870 Vulaines s/ Seine (FR)**

(72) Inventor: **Desforges, Patrick**
**65, rue du Docteur Siffree**
**F-77930 Perthes (FR)**

(74) Representative: **Hollinghurst, Antony**
**Britax Central Services 40 Granby Avenue**
**Garretts Green Birmingham, B33 OSJ (GB)**

Courier Press, Leamington Spa, England

Folding exterior rearview mirror, particularly for a motor vehicle

The present invention concerns a foldable exterior rearview mirror assembly, particularly for a motor vehicle and more particularly a rearview mirror comprising a mirror member mounted in an adjustable housing.

Rearview mirrors of the foregoing type, which can readily be folded along the body of the vehicle in the event of a lateral impact, are generally joined to the said body by a pivot joint located between the housing and a base which is fixed to the vehicle. To keep this joint working well and prevent it from jamming, it is preferable to protect it against dust and weather.

Of the known means used to protect the joint without interfering with the folding movement of the housing, the most satisfactory one consists of an extensible pleated sleeve made of a supple material such as rubber, which is fixed both to the vehicle and to the housing and which can accompany the movement of the housing without interfering with it while ensuring that the articulation is well protected.

Although satisfactory in many cases, extensible sleeves nonetheless have drawbacks such as their unattractive appearance and the difficulties involved in their manufacture in view of the special structure of their ends required to facilitate their attachment. Moreover, when the housings of such rearview mirrors are folded back against the vehicle body, such extensible sleeves, being attached on the one hand to the vehicle body and on the other to the mirror housing, are subjected simultaneously to flexing and tension with the result that, after a period of use, the rubber of the sleeve loses its suppleness and little cracks frequently appear, which in course of time turn into tears.

DE—A—2546759 discloses an alternative arrangement in which one end of a resilient sleeve is connected to the mirror housing and the other end is in the form of a lip which abuts against the vehicle body. When the mirror housing is displaced from its normal position, a gap opens between the lip and the vehicle body on one side, thereby exposing the mechanism within.

An object of the present invention is therefore to propose a folding outside rearview mirror with an adjustable housing whose pivot joint is protected by a protective cover which does not have the drawbacks mentioned above.

According to the invention, in a foldable exterior rearview mirror assembly of the type comprising a base for attachment to a structure on which the mirror is to be mounted, an adjustable housing having a lateral connecting arm and containing a mirror, and a pivot joint between the base and the end of the connecting arm, there is provided a flexible sleeve fitted around the connecting arm and the pivot joint, the sleeve being attached to the assembly at one end and left free at its other end, the part of the assembly adjacent to the free end of the sleeve comprising an annular recess in which the said end is freely movable.

In one form of the invention the sleeve is attached to the vehicle and the side of the housing to which the connecting arm is attached comprises an annular recess surrounding the base of the arm, the free end of the sleeve penetrating into said recess.

Alternatively, the sleeve can be attached to the housing while the base has an annular recess surrounding the joint into which the free end of the sleeve projects.

Embodiments of the invention will now be described, by way of example, with reference to the accompanying drawings, in which:

Figure 1 is an elevation of a rearview mirror in accordance with the invention, broken away to show the pivot joint in section;

Figure 2 is a cross-section on the line II—II in Figure 1;

Figure 3 is a cross-section along the line III—III in Figure 1; and

Figure 4 is a view, similar to Figure 1, of an alternative embodiment of the invention.

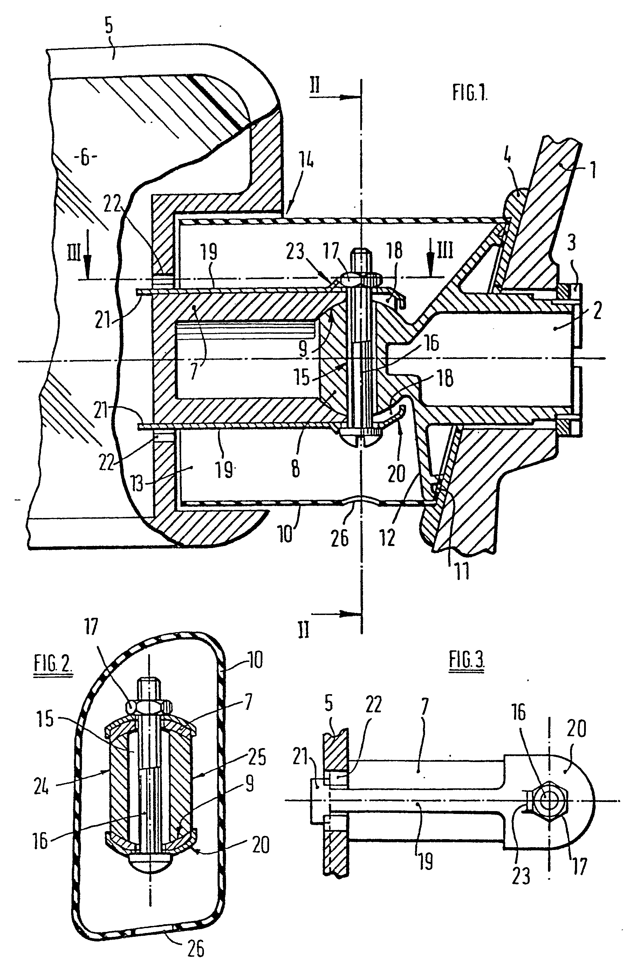

As shown in Figure 1, a folding exterior rearview mirror has a base 2 passing through a body panel 1 of a vehicle. The base 2 has a flange which rests on a base plate 4 on the outside of the panel 1 and is held in position by a clamping nut 3 screwed onto the end of the base 2 which projects into the inside of the panel 1.

The rearview mirror comprises an adjustable housing 5 containing a fixed mirror 6 and having a hollow cylindrical lateral connecting arm 7 terminating at its free end in the spherical socket 9 of a ball joint, the ball 8 of which is integral with the base 2. A supple elastic sleeve 10 made of rubber or plastics material is fitted around the connecting arm 7 of the housing and the ball joint 8, 9. The sleeve 10 has an attachment flange 11 at its end nearer to the vehicle body. The flange 11 is gripped, during assembly, between the base plate 4 and a flared skirt 12 which extends around the body of the base 2. The opposite end 13 of the sleeve 10 is left free and, when the housing 5 is in the normal position, the said end 13 is disposed within an annular recess 14 in the housing 5 extending round the base of the lateral connecting arm 7.

The housing 5, the lateral connecting arm 7 and the socket 9 are preferably moulded as a single piece in a plastic material such as polypropylene. Since, as a result of the use of this plastics material, the socket 9 may not have sufficient strength to resist the housing being torn off, the ball joint 8, 9 is reinforced by means of a screw 16 passing through a diametrical bore hole 15, of oblong cross-section, in the ball 8 and through open-ended slots 18 in the socket 9.

The slots 18 are provided, instead of diametrically opposite holes, in order to facilitate the moulding of the lateral connecting arm 7. The slots 18 are diametrically opposite each other and both run in the same plane parallel to the plane of the mirror 6. The open ends of the slots 18 are located in the ends of the arm 7.

A nut 17 is screwed on the end of the screw 16, thus making it possible to regulate the grip of the socket 9 on the ball 8 and preventing the latter from being disconnected as a result of the opposite ends of the arm 7 splaying apart.

In order to prevent the socket 9 from becoming detached from the ball 8 and the screw 16, two retainers 19 of pressed sheet metal are disposed on respective sides of the arm 7 so as to enclose it and cover the portions of the free end of the said arm in which the slots 18 are formed. These retainers 19 each comprise an end 20 which is partly spherical and is provided with a central hole for receiving the screw 16 and with a lug 23 serving to stop rotation of the screw 16 or its clamping nut 17. The opposite end of each retainer 19 is provided with a T-shaped catch 21 intended to engage in a respective coupling slot 22 in the wall of the bottom of the recess 14 in the housing 5 (see Figure 3).

As can be seen from Figure 2, the ball 8 is not completely spherical but has two opposite flats 24 and 25 which are symmetrical with respect to the plane containing the central axis of the screw 16 and the axis of the hollow body of the base 2. Similarly, the width of the two portions of the socket 9 which cover the diametrically opposite spherical portions of the ball joint 8 is limited to that of these portions, with the result that the socket 9 comprises two symmetrical slots which are diametrically opposite each other and are of greater width than the distance between the two flats 24 and 25 of the ball 8.

It will be seen from Figure 2 that the sleeve 10 has a substantially rectangular cross-section and its bottom part has a hole 26 in approximate alignment with the screw 16 of the ball joint. The hole 26 serves both to discharge any water which may condense inside the sleeve 10 and to permit engagement of a screwdriver with the screw 16 so as to adjust the grip of the socket 9 on the ball 8.

As mentioned above, the hole 15 in the ball 8 for receiving the screw 16 is oblong, having a cross-section which is elongate in the direction perpendicular to the two flats 24 and 25 of the ball 8. This provides a few millimetres of play on either side of the screw 16 in the said direction, thus permitting limited rocking of the screw 16, and thereby of the arm 7 at the end of which the said screw is attached and of the housing 5. This permitted range of movement corresponds to the required range of vertical adjustment of the mirror 6 of the rearview mirror.

The rearview mirror described above is assembled as follows. The ball 8, attached to the base 2, is offered up to the socket 9 of the connecting arm 7 with the flats 24 and 25 confronting the two spherical parts of the socket 9. After insertion, the base 2 is turned through a quarter of a revolution so as to bring the central hole 15 in the ball 8 into line with the two aligned holes of the said opposite spherical portions of the arm 7. Next the two retainers 19 are placed on either side of the said arm so that their ends 20 cover the latter's spherical portions. Then the screw 16 is inserted through the hole 15 in the ball 8 and the grip of the socket 9 is adjusted with the aid of the nut 17 which is locked in position by means of the lug 23. Next the sleeve 10 is fitted around the ball joint 8,9 and the connecting arm 7, and the flange 11 of the sleeve 10 is gripped between the free end of the skirt 12 of the base 2 and the plate 4 which is then put against the panel 1 of the vehicle with the body of the base 2 engaged in a corresponding aperture in this panel 1. Finally, the base 2 is secured to the panel 1 with the aid of the nut 3 which is screwed on to the threaded end of the said body.

During mounting, care will be taken to dispose the screw 16 approximately vertically with the screw head and the aperture 26 of sleeve 10 at the bottom.

Thus mounted, the housing 5 of the rearview mirror can be adjusted in the vertical direction due to the play provided in the passage 15 on either side of the screw 16 permitting some 15° of movement on each side of the vertical. The housing 5 is also adjustable in the lateral direction about the axis of the screw 16 as a result of the ball joint 8, 9. In the event of a lateral impact, the housing 5 can fold back along the panel 1 of the vehicle, pivoting around the said screw 16.

Because the end 13 of the sleeve 10 is left free, the said sleeve is not subjected to any torsion or twisting by the housing 5 during vertical adjustment, in contrast to what usually happens with conventional protective extensible jackets. Moreover, the sleeve 10 is not subjected to traction or flexing during lateral adjustment of the housing 5, owing to the free state of its end 13 which moves telescopically inside the recess 14 in the housing 5. Finally, if folding back occurs under the influence of a lateral impact, the sleeve 10 is simply subjected to flexing in alignment with the screw 16, but without being subjected to any tensile stress as is the case with conventional extensible jackets.

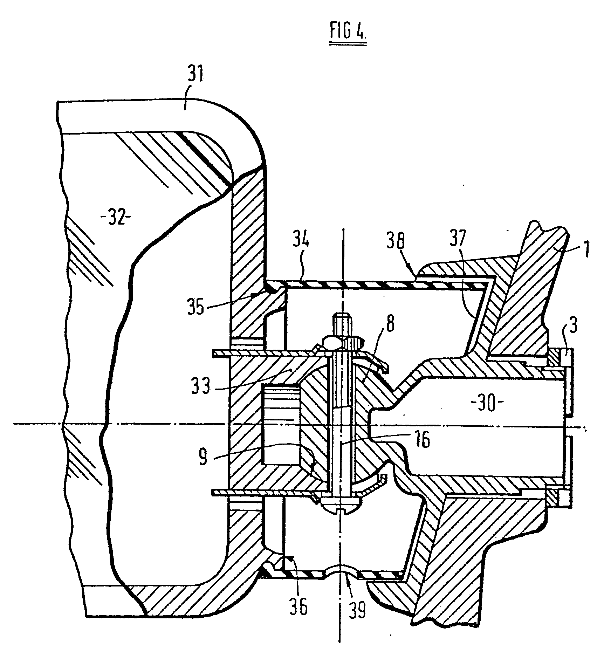

In the alternative embodiment shown in Figure 4, the supple sleeve is attached to the mirror housing instead of the base of the rearview mirror. In this embodiment, the mirror comprises a base 30 fixed by means of a clamping nut 3 to a panel 1 of a vehicle and a housing 31 containing a mirror 32 and a lateral connecting arm 33 linked to the base 30 by means of a ball joint which is identical to the one described above with reference to Figures 1 and 2. The ball joint and the arm 33 are protected from the weather by a supple and elastic sleeve 34, one end of which comprises an inner rim 35 disposed in a corresponding groove on the periphery of a shoulder 36 located on the housing 31, the said shoulder 36 surrounding the arm 33. The other end 37 of the sleeve 34, which is situated nearest to the vehicle, is left free and extends into an annular recess 38 in the base 30 around the ball and socket joint. The sleeve 34 also has a hole 39 in its lower portion and on the axis of the screw of the ball joint serving the same purposes as the hole 26 of Figures 1 to 3.

The result obtained and the advantages offered by the alternative embodiment described above by reference to Figure 4 are the same as those obtained with the first embodiment shown in Figures 1 to 3.

The manner of mounting the rearview mirror of Figure 4 is the same as that described above, expect for the fitting of the sleeve 34 whose rim 35 is snapped into the corresponding groove in the shoulder 36. If desired the sleeve 34 can be securely fixed to the shoulder 36 by gluing.

The scope of the invention is not, of course, limited to either of the embodiments described above. For example, the mirror according to the invention can be remote controlled, particularly from inside the vehicle, with the aid of cables passing through the respective bases 2 and 30 whose bodies are hollow, as can be seen in Figures 1 and 4. In this case, the balls 8 of the ball joints are pierced by through holes to accommodate such cables. It is also possible for a mirror to be adjustably mounted in the housing and controlled from a distance from inside the vehicle by cables or by any other mechanical or electrical means passing through the attachment bases, the ball joints and the wall of the housing situated at the level of the latter's connecting arm.

## Claims

1. A foldable exterior rearview mirror assembly comprising a base (2) for attachment to a structure (1) on which the mirror is to be mounted, an adjustable housing (5) having a lateral connecting arm (7) and containing a mirror (6), a pivot joint (8, 9) between the base (2) and the end of the connecting arm (7), and a flexible sleeve (10, 34) fitted around the connecting arm (7, 33) and the pivot joint (8, 9) the sleeve being attached to the assembly at one end (11, 35) and left free at its other end (13, 37), characterised in that the part (5, 30) of the assembly adjacent the free end of the sleeve (10, 34) comprises an annular recess (14, 38) in which the said end is freely movable.

2. A rearview mirror according to claim 1, characterised in that the sleeve (10) is attached to the base (2), the side of the housing (5) to which the connecting arm (7) is attached comprises an annular recess (14) surrounding the end of said arm (7) which is connected to the housing (5) and in that the free end of the sleeve projects into this recess (14).

3. A rearview mirror according to claim 1, characterised in that the sleeve (34) is attached to the housing (31) and the base (30) has an annular recess (38) into which the free end of the sleeve (34) projects.

## Revendications

1. Rétroviseur extérieur rabattable comprenant une embase () pour la fixation sur une structure (1) sur laquelle le rétroviseur doit être monté, un boîtier réglable (5) comportant un bras latéral de liaison (7) et contenant un miroir (6), une articulation (8, 9) entre l'embase (2) et l'extrémité du bras de liaison (7) et un manchon flexible (10, 34) monté autour du bras de liaison (7, 33), et de l'articulation (8, 9), le manchon étant fixé sur le rétroviseur à une extrémité (11, 35) et laissé libre à son autre extrémité (13, 37), caractérisé en ce que la partie (5, 30) du rétroviseur qui est adjacente à l'extrémité libre du manchon (10, 34) comprend un évidement annulaire (14, 38) dans lequel ladite extrémité est librement mobile.

2. Rétroviseur selon la revendication 1, caractérisé en ce que le manchon (10) est fixé sur l'embase (2), en ce que le côté du boîtier (5) sur lequel le bras de liaison (7) est fixé comprend un évidement annulaire (14) entourant l'extrémité dudit bras (7) qui est reliée au boîtier (5) et en ce que l'extrémité libre du manchon pénètre dans ledit évidement (14).

3. Rétroviseur selon la revendication 1, caractérisé en ce que le manchon (34) est fixé sur le boîtier (31) et en ce que l'embase (30) comporte un évidement annulaire (38) dans lequel pénètre l'extrémité libre du manchon (34).

## Patentansprüche

1. Klappbare Außenrückspiegeleinheit, bestehend aus einer Basis (2) zur Befestigung an einer Struktur (1), an der der Rückspiegel montiert werden soll, einem einstellbaren Gehäuse (5) mit einem seitlichen Verbindungsarm (7) und enthaltend einen Spiegel (6), einem Schwenkgelenk (8, 9) zwischen der Basis (2) und dem Ende des Verbindungsarms (7), und einer flexiblen Manschette (10, 34), die den Verbindungsarm (7, 33) und das Schwenkgelenk (8, 9) umgibt, wobei die Manschette an einem Ende (11, 35) an der Einheit befestigt und an ihrem anderen Ende (13, 37) frei ist, dadurch gekennzeichnet, daß der dem freien Ende der Manschette (10, 34) benachbarte Teil (5, 30) der Einheit eine ringförmige Ausnehmung (14, 38) aufweist, in der dieses Ende frei beweglich ist.

2. Rückspiegel nach Anspruch 1, dadurch gekennzeichnet, daß die Manschette (10) an der Basis (2) befestigt ist, daß die Seite des Gehäuses (5), an der der Verbindungsarm (7) befestigt ist, eine das Ende dieses Arms (7) umgebende ringförmige Ausnehmung (14) aufweist, und daß das freie Ende der Manschette in diese Ausnehmung (14) hineinragt.

3. Rückspiegel nach Anspruch 1, dadurch gekennzet, daß die Manschette (34) an dem Gehäuse (31) befestigt ist und die Basis (30) eine ringförmige Ausnehmung (34) aufweist, in die das freie Ende der Manschette (34) hineinragt.

FIG. 1.

FIG. 2.

FIG. 3.

FIG 4.